Europäisches Patentamt

(19) European Patent Office

Office européen des brevets

(11) Publication number: **0 217 453**
**B1**

(12) **EUROPEAN PATENT SPECIFICATION**

(45) Date of publication of the patent specification:
18.07.90

(51) Int. Cl.⁵: **C08J 3/22**, C08L 67/06

(21) Application number: 86201592.2

(22) Date of filing: 16.09.86

(54) Colour paste composition.

<table>
<tr><td>

(30) Priority: **17.09.85 NL 8502537**

(43) Date of publication of application:
**08.04.87 Bulletin 87/15**

(45) Publication of the grant of the patent:
**18.07.90 Bulletin 90/29**

(84) Designated Contracting States:
**BE DE FR GB IT NL**

(56) References cited:
**US-A- 4 268 431**

**The file contains technical information submitted after the application was filed and not included in this specification**

</td><td>

(73) Proprietor: **DSM RESINS BV, Ceintuurbaan 5, NL-8022 AW Zwolle(NL)**

(72) Inventor: **Voskamp, Arnold Jan, Kerkdijk 28, NL-4927 RA Hooge Zwaluwe(NL)**
Inventor: **Barendregt, Teunis Pieter, Hoogwerf 4, NL-3214 EN Zuidland(NL)**

(74) Representative: **Hoogstraten, Willem Cornelis Roeland et al, OCTROOIBUREAU DSM Postbus 9, NL-6160 MA Geleen(NL)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

Pigment paste for unsaturated polyester containing moulding compositions comprising a pigment and, as grinding medium, an unsaturated polyester and an ethylenically unsaturated monomer. Such pigment pastes are suitable for moulding compounds like sheet, bulk and dough moulding compounds, abbreviated as SMC, BMC and DMC.

Pigment pastes are mixtures of dyes and media compatible with polyester resin, the so-called grinding media, in which the dyes are mixed. As grinding media sometimes lubricants are used, but mostly polyester resins. In US-A-4,268,431 the use of unsaturated polyesters is described as grinding medium. According to US-A-4,268,431 monohydric alcohols are applied as chain stopper when making the polyesters. As a result the molecular weight is low. Such a low molecular weight is required for the necessary moistening properties. Optionally an ethylenically unsaturated monomer is added to further reduce the viscosity.

A polyester resin composition suitable as moulding compound contains a relatively high percentage of highly reactive polyester resin. Such a composition is processed in the first instance to form so-called prepregs. Prepregs are generally unsaturated polyesterstyrene mixtures with thickeners on glass fibre mats for, for instance, SMC, or with chopped glass fibres for, for instance, DMC and BMC, with the polyester resin composition in the B-stage.

With these moulding compounds a disadvantage is, if much pigment paste must be added, that the highly reactive polyester resin is diluted too much with a polyester having a low molecular weight without being very reactive. This has adverse effects for the mechanical and/or physical properties of the finally resulting product. For instance it appears that ageing of moulding objects by weather effects is adversely affected. Further, the curing time will be longer, too.

Now, according to the present invention this is avoided because the pigment paste for unsaturated polyester containing moulding compositions comprising a pigment and, as grinding medium, an unsaturated polyester and an ethylenically unsaturated monomer is characterized in that the pigment paste comprises 50–5 parts by weight of pigment and 50–95 parts by weight of grinding medium, which grinding medium comprises:

75-40 parts by weight of a polyester resin with an equivalent weight per double bond between 142 and 390 and a molecular weight between 1000-4000 Dalton and 60-25 parts by weight of an ethylenically unsaturated monomer with 5-50 C-atoms.

By using the pigment paste according to the invention the SMC composition is now prevented from being diluted too much with polyester resin or lubricant of too low molecular weight and reactivity so that the physical and mechanical properties continue to be of a high standard. Surprisingly it has been found that the dispersion of the pigment paste in the polyester resin-containing composition for the moulding compounds proceeds very well indeed and without problems.

The molecular weight of the polyester resin is preferably between 1500 and 2500, and the reactivity between 142 and 260.

Preference is given to applying the resin in 60-70 parts by weight. The ethylenically unsaturated monomer is preferably applied in 30-40 parts by weight.

In order to have a pigment paste with good properties, 50-95 parts by weight of the grinding medium are used at 50-5 parts by weight of the pigment. By preference, 60-90 parts by weight of the grinding medium is used at 10-40 parts by weight of the pigment.

In order to increase the shelf life of the pigment paste, preference is given to the addition of inhibitors. Particularly an amount of up to 10-1000 ppm inhibitor calculated on the amount of polyester resin is an advantage.

The polyesters according to the invention for the dye(s) to be incorporated in are highly reactive polyesters. The polyesters are the reaction products of dicarboxylic acids and dihydric alcohols as the main building blocks.

As dicarboxylic acids by preference acids are chosen that contain 4-10 C atoms like fumaric, maleic, ethylmaleic, dimethylmaleic, glutaconic, itaconic, mesaconic and citraconic acid their anhydrides or esters, or mixtures of these, optionally together with aromatic acids like isophthalic, terephthalic and orthophthalic acid (anhydride), or, for instance, aliphatic acids like adipic, succinic, hexachlororendomethylene tetrahydrophthalic acid their anhydrides or esters. As dihydric alcohols, such are chosen that contain 2-10 C-atoms by preference, as ethyleneglycol, diethyleneglycol, propyleneglycol, dipropyleneglycol, butanediol, hexanediol or, for instance, neopentylglycol or corresponding epoxy compounds.

The use of a polyester with a high molecular weight will have a positive effect notably on the mechanical and physical properties of the product.

As ethylenically unsaturated compound can be used for instance vinylaromatic, acrylic, allylic ester and vinyl ester compounds, like styrene, α-methylstyrene, p-methylstyrene, dimethylstyrene, divinylbenzene, vinylethylene, methylacrylate, ethylacrylate, methylmetacrylate, diallylphthalate, vinylacetate, mixtures thereof, and the like. By preference a compound is used that is liquid at ambient temperature. Especially vinylaromatic compounds are preferred.

Virtually all customary dyes can be mixed with these polyesters, such as carbon black, cobalt-aluminate, iron oxide, chromium oxide, cadmium oxides, titanium oxides, mixed crystals of barium sulphate-barium manganate, but also organic compounds such as phthalocyanines can be used.

The inhibitors used may be the usual compounds. Examples are hydroquinone, p-benzoquinone, chloroxanil and nitrobenzene.

The moulding compositions like SMC, BMC and DMC are common in the art, and the polyesters used in the moulding compound may be the customary polyesters. The thickening of the moulding compounds can be effected in a known way with the usual oxides like magnesium oxide and calcium oxides and hydroxides like aluminium hydroxide, calcium hydroxide and magnesium hydroxide. Normally speaking, the moulding compound will contain copolymerizable, ethylenically unsaturated monomers, such as styrene. It is possible also to use prepolymers of, for instance, styrene. Furthermore, low profile additives are often applied.

The moulding compositions prepared with a pigment paste according to the invention are very well applied as prepregs to make objects for which mechanical and physical performance is very important.

The moulding compounds according to the invention can be used in the automotive industry, as moulded articles for outdoor use, as sanitary applications, in electrical applications, switch and meter cabinets, etc.

The invention is further elucidated by means of the following example without, however, being limited thereto.

Example

50 parts by weight of an unsaturated polyester capable of being crosslinked, based on propyleneglycol and fumaric acid (Synolite® TP 846 VG, DSM Resins) with an equivalent weight per double bond of 156, 5 parts by weight of an unsaturated polyester capable of being crosslinked, based on propyleneglycol and an oligomer of alkylbenzoate/maleate (Synolite® TP 648 VG/ DSM Resins) with an equivalent weight per double bond of 620, 40 parts by weight of a solution of polystyrene in styrene (Synolite® TP 822 VZ, DSM Resins), 3 parts by weigth styrene, 1 part by weight zinc stearate, 3 parts by weight of a fatty acid mixture (VR 3 of Union Carbide), 100 parts by weight aluminiumtrihydrate (35 parts by weight Martinal OL 104 and 65 parts by weight Martinal ON 310 of Martins Werk), 100 ppm p-benzoquinone, 1.5 parts by weight initiator (Trigonox® C and 29B50) and 5 parts by weight magnesiumoxide paste (Lutavol MK 35, Lehmann and Voss) are mixed with 28 parts pigment paste.

The pigment pastes consist of 7 parts carbon black, iron oxide or chromium oxide in, every time, 21 parts Synolite® TP 846 VG.

With these compositions SMCs with 20% (wt) glass fibre are made.

Moulded articles based on these moulding compounds show no signs of ageing after 500 hours Xeno. test 1200 (according to DIN 53387).

Compositions as described above with calciumcarbonate (Millicarb, 100 parts) instead of aluminiumtrihydrate produced the same good results.

## Claims

1. Pigment paste for unsaturated polyesters containing moulding compositions comprising a pigment and, as grinding medium, an unsaturated polyester and an ethylenically unsaturated monomer characterized in that the pigment paste comprises 50–5 parts by weight of pigment and 50–95 parts by weight of grinding medium, which grinding medium comprises:

75–40 parts by weight of a polyester resin with an equivalent weight per double bond between 142 and 390 and a molecular weight between 1000–4000 Dalton and 60–25 parts by weight of an ethylenically unsaturated monomer with 5–50 C-atoms.

2. Pigment paste according to claim 1, characterized in that a polyester resin is chosen having an equivalent weight per double bond of between 142 and 260.

3. Pigment paste according to any one of claims 1–2, characterized in that a polyester resin is chosen having a molecular weight of between 1500 and 2500.

4. Pigment paste according to any one of claims 1–3, characterized in that the unsaturated monomer applied is styrene.

5. Pigment paste according to any one of claims 1–4, characterized in that the paste contains an inhibitor.

6. Pigment paste according to any one of claims 1–5, characterized in that the paste contains 10–1000 ppm inhibitor calculated on the amount of polyester.

7. Composition containing polyester resin, produced with a colour paste according to any one of claims 1–6.

8. Composition containing polyester resin according to claim 7, characterized in that it is suitable for Sheet, Bulk or Dough Moulding Compounds.

## Patentansprüche

1. Pigmentpaste für ungesättigte Polyester enthaltende Formmassen umfassend ein Pigment und als Mahlmedium einen ungesättigten Polyester und ein äthylenisch ungesättigtes Monomer, dadurch gekennzeichnet, daß die Pigmentpaste 50 bis 5 Gew.Teile Pigment und 50 bis 95 Gew.Teile Mahlmedium umfaßt, welches Mahlmedium 75 bis 40 Gew. Teile eines Polyesterharzes mit einem Äquivalentgewicht pro Doppelbindung von 142 bis 390 und einem Molgewicht von 1000 bis 4000 Dalton und 60 bis 25 Gew. Teile eines äthylenisch ungesättigten Monomers mit 5 bis 50 C-Atomen umfaßt.

2. Pigmentpaste nach Anspruch 1, dadurch gekennzeichnet, daß ein Polyester mit einem Äquivalentgewicht pro Doppelbindung von 142 bis 260 gewählt wird.

3. Pigmentpaste nach einem der Ansprüche 1 bis 2, dadurch gekennzeichnet, daß ein Polyesterharz mit einem Molgewicht von 1500 bis 2500 gewählt wird.

4. Pigmentpaste nach einem der Ansprüche 1 bis 3, dadurch gekennzeichnet, daß das verwendete ungesättigte Monomer Styrol ist.

5. Pigmentpaste nach einem der Ansprüche 1 bis 4, dadurch gekennzeichnet, daß die Paste einen Inhibitor enthält.

6. Pigmentpaste nach einem der Ansprüche 1 bis 5, dadurch gekennzeichnet, daß die Paste 10 bis 1000 ppm Inhibitor, bezogen auf die Polyestermenge, enthält.

7. Polyesterharzhaltige Zusammensetzung, hergestellt mit einer Farbpaste nach einem der Ansprüche 1 bis 6.

8. Polyesterharzhaltige Zusammensetzung nach Anspruch 7, dadurch gekennzeichnet, daß sie für SMC-, BMC- oder DMC-Massen geeignet ist.

## Revendications

1. Pâte pigmentaire pour des compositions de moulage contenant des polyesters insaturés comprenant un pigment et, à titre de milieu de broyage, un polyester insaturé et un monomère à insaturation éthylénique, caractérisée en ce que la pâte pigmentaire comprend de 50 à 5 parties en poids de pigment et de 50 à 95 parties en poids d'un milieu de broyage, milieu de broyage qui comprend :
75 à 40 parties en poids d'une résine de polyester ayant un poids équivalent par double liaison compris entre 142 et 390 et une masse moléculaire comprise entre 1000 et 4000 Dalton et
60 à 25 parties en poids d'un monomère à insaturation éthylénique contenant de 5 à 50 atomes de carbone.

2. Pâte pigmentaire selon la revendication 1, caractérisée en ce qu'on choisit une résine de polyester ayant un poids équivalent par double liaison compris entre 142 et 260.

3. Pâte pigmentaire selon la revendication 1 ou 2, caractérisée en ce qu'on choisit une résine de polyester ayant une masse moléculaire comprise entre 1500 et 2500.

4. Pâte pigmentaire selon l'une quelconque des revendications 1 à 3, caractérisée en ce que le monomère insaturé appliqué est le styrène.

5. Pâte pigmentaire selon l'une quelconque des revendications 1 à 4, caractérisée en ce que la pâte pigmentaire contient un inhibiteur.

6. Pâte pigmentaire selon l'une quelconque des revendications 1 à 5, caractérisée en ce qu'elle contient de 10 à 1000 ppm d'inhibiteur par rapport à la quantité de polyester.

7. Composition contenant une résine de polyester, produite à l'aide d'une pâte pigmentaire selon l'une quelconque des revendications 1 à 6.

8. Composition contenant une résine de polyester selon la revendication 7, caractérisée en ce qu'elle convient pour les composés de moulage des feuilles, en masse ou de pâte.